# EUROPEAN PATENT APPLICATION

(11) **EP 2 104 203 A1**
(43) Date of publication of application: **23.09.2009**
(21) Application number: 07850770.4
(22) Date of filing: 18.12.2007
(51) Int. Cl.: H02K 1/26, H02K 7/116, H02K 23/04

(54) **MINIATURE MOTOR**

(30) Priority: 21.12.2006 JP 2006343767
(71) Applicant: Mabuchi Motor Co., Ltd., Matsudo-shi, Chiba 270-2280 (JP)
(72) Inventor: SAYA, Tsutomu, Matsudo-shi Chiba 270-2280 (JP)
(74) Representative: 2K Patentanwälte Blasberg Kewitz & Reichel
(86) International application number: PCT/JP2007/074282
(87) International publication number: WO 2008/075667

(57) **Abstract**

A rotor pole laminated core assembly is formed by means of stacking a predetermined number of steel plate cores and two end steel plate cores such that one of the end steel plate cores is located at one end of the laminated core assembly and the other end steel plate core is located at the other end of the laminated core assembly. Each of the end steel plate cores includes bent portions extending from ends of radially extending arm portions. The bent portions are wider than the arm portions and circumferentially extend toward adjacent poles. Each wide bent portion, which extends from the corresponding arm portion, has cutouts located on opposite sides of the arm portion.

## Description

### TECHNICAL FIELD

The present invention relates to a miniature motor in which end steel plate cores are provided at opposite ends of a laminated core assembly which forms rotor poles, and radially outer end portions of the end steel plate cores are bent outward with respect to the axial direction of a shaft (hereinafter referred to as the "shaft axial direction").

### BACKGROUND ART

In a known miniature motor, in order to reduce the axial length of a rotor pole core to thereby reduce the length of the motor, while securing the amount of magnetic flux so as to prevent a drop in motor performance, radially outer end portions of two cores located at opposite ends of the laminated core assembly are bent outward with respect to the shaft axial direction, thereby concentrating magnetic flux.

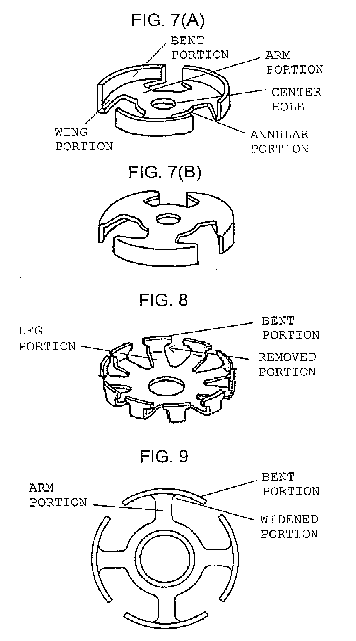

FIG. 7 shows conventional rotor pole cores whose radially outer ends are bent. Specifically, sections (A) and (B) of FIG. 7 show two cores located at opposite ends of a laminated core assembly (see Patent Document 1). Each of the illustrated cores includes an annular portion having a center hole for receiving a motor shaft; arm portions which extend radially from the annular portion and which are identical in number with rotor poles; wing portions circumferentially extending, in opposite directions, from radially outward ends of the arm portions; and bent portions which are formed by means of bending radially outer end portions of the wing portions substantially at right angles and outward with respect to the shaft axial direction, and each of which has a L-shaped cross section. Cores having such bent portions are disposed at opposite ends, and a predetermine number of ordinary cores not having bent portions are stacked therebetween, whereby a laminated core assembly is formed.

Coils are wound around the arm portions of such a laminated core assembly. The wound coils project from opposite ends of the laminated core assembly with respect to the shaft axial direction. Radially outer ends of the end cores which are bent in the shaft axial direction are located on the radially outer side of the projecting portions of the coils, so as to concentrate magnetic flux. In other words, the projecting portions of the coils are located on the radially inner side of the bent portions. In the illustrated case where the rotor has three poles, sufficient winding space is present, and the wing portions can have a sufficiently large width in the radial direction. Therefore, bending work for forming the bent portions can be readily performed.

It has been known that use of a multi-pole core having six or more poles is effective in reducing cogging (variation in rotation stemming from variation in magnetic resistance during rotation) to thereby reduce mechanical noise and vibration of a motor. Further, forming the bent portions to extend not only along each arm portion but also along the wing portions on opposite sides of the arm portion to thereby extend toward adjacent poles is desired, in order to concentrate magnetic flux and reduce cogging. However, in the case of a multi-pole core, the width of the wing portions with respect to the radial direction becomes small, which makes formation of the bent portions difficult.

FIG. 8 is a view showing another conventional rotor pole core whose radially outer ends are bent (see Patent Document 2). In the illustrated core, when bent portions wider than arm portions are formed at the distal ends of the arm portions, removed portions are formed in the bent portions so as to facilitate bending work. Since the bent portions are provided so as to concentrate magnetic flux, removal of portions of the bent portions is not desired, because the amount of effective magnetic flux drops.

FIG. 9 is a view showing another conventional rotor pole core whose radially outer ends are bent (see Patent Document 3). The illustrated core has bent portions extending from the radially outer ends of arm portions outward with respect to the shaft axial direction. This core has a structure which corresponds to the structure shown in FIG. 7 but in which the width of the wing portions in the radial direction is reduced to a sufficient degree. However, this core has widened portions at the radially outer ends of the arm portions so as to facilitate bending work. In the case where a multi-pole core structure is employed in order to reduce cogging as described above, provision of widened portions hinders securement of sufficient winding space. Further, when the illustrated core shape is employed, bending work cannot be performed stably at joint portions of the widened portions. Although Patent Document 3 does not clearly show the shape of each bent portion as viewed from the side, bending work is difficult to perform unless the core is shaped such that a clearance is formed between the illustrated core and a laminated core adjacent thereto with respect to the shaft axial direction. In short, the core cannot be readily bent unless wing portions as shown in FIG. 7 or removed portions as shown in FIG. 8 are provided. When the above-mentioned clearance is provided, the amount of effective magnetic flux drops.
Patent Document 1: Japanese Utility Model Application Laid-Open (*kokai*) No. S62-122470
Patent Document 2: Japanese Utility Model Application Laid-Open (*kokai*) No. S59-179447
Patent Document 3: Japanese Utility Model Application Laid-Open (*kokai*) No. S61-46856

### DISCLOSURE OF THE INVENTION

### PROBLEMS TO BE SOLVED BY THE INVENTION

An object of the present invention is to solve the above-mentioned problems, and to provide a rotor pole laminated core for a motor in which bent portions are provided at end portions of arm portions of the core so at to reduce cogging to thereby lower mechanical nose and vibration of the motor, and in which the core has a shape which facilitates bending work for forming the bent portions without decreasing the amount of effective magnetic flux.

Another object of the present invention is to allow the bent portions to have a sufficiently large area so as to concentrate magnetic flux without reducing winding spaces.

### MEANS FOR SOLVING THE PROBLEMS

The present invention provides a small-sized motor configured such that magnets are attached to an inner circumferential surface of a motor casing, an end bell is fitted into an opening portion of the motor casing, and a commutator and rotor poles formed by a laminated core assembly and coils wound around the laminated core assembly are provided on a rotating shaft to thereby form a rotor, the rotating shaft being supported by a bearing provided at the center of a bottom portion of the motor casing and a bearing provided in a central portion of the end bell, wherein the laminated core assembly is formed by means of stacking a predetermined number of steel plate cores and two end steel plate cores in a shaft axial direction such that one of the end steel plate cores is located at one end of the laminated core assembly and the other end steel plate core is located at the other end of the laminated core assembly, each end steel plate core having a radially outer end portion bent outward with respect to the shaft axial direction. Each end steel plate core includes an annular portion having a center hole for receiving the rotating shaft, arm portions which extend radially outward from the annular portion and which are identical in number with the rotor poles, and bent portions extending from radially outer ends of the arm portions. The bent portions are wider than the arm portions as measured in the circumferential direction and circumferentially extend toward adjacent poles. Each wide bent portion, which extends from the corresponding arm portion, has cutouts located on opposite sides of the arm portion.

Each of the cutouts assumes a U-like shape, the form of a slit, or the form of a slit having a through hole at the bottom of the slit. The rotor poles are skewed at a predetermined angle in relation to the shaft axial direction, and the bent portions are screwed, in relation to the shaft axial direction, at an angle equal to the screw angle of the rotor poles. Each of the steel plate cores located between the end steel plate cores is configured such that each of radially extending arm portions has a wing portion extending from the radially outer end thereof toward adjacent poles; and the laminated core assembly is configured such that end surfaces of each end steel plate core located on opposite sides of the cutout come into contact with corresponding wing portions of a steel plate core adjacent to the end steel plate core with respect to the shaft axial direction.

Further, a small-sized motor of the present invention constitutes a motor with a speed reducer by being integrated with a reducer section configured such that a worm fixed to the rotating shaft and a worm wheel in meshing-engagement with the worm are accommodated in a gear box formed of resin.

### EFFECT OF THE INVENTION

The end steel plate cores of the present invention each have bent portions which circumferentially extend over a distance greater than the width of the arm portions, and can be configured such that the bent portions of the end steel plate cores abut against the corresponding steel plate cores adjacent to the end steel plate cores with respect to the shaft axial direction, without forming clearances therebetween. Therefore, effective magnetic flux can be secured, and coils are prevented from being caught in the clearances during winding.

Further, according to the present invention, not only the rotor poles, but also the bent portions are screwed. Therefore, cogging can be reduced, whereby mechanical noise and vibration can be reduced. Further, coils are prevented from being caught by the bent portions during winding.

### BRIEF DESCRIPTION OF THE DRAWINGS

FIG. 1 is a longitudinal sectional view of a motor with a speed reducer configured in accordance with the present invention.
FIG. 2 is a pair of views showing a rotor shown in FIG. 1.
FIG. 3 is a series of views showing, in detail, an end steel plate core having bent portions shown in FIG. 2.
FIG. 4 is a view exemplifying a steel plate core located between the end steel plate cores.
FIG. 5 is a pair of views showing, in detail, a pair of end cores having bent portions different from those shown in FIG. 3.
FIG. 6 is a pair of views showing, in detail, a pair of end cores having bent portions different from those shown in FIGS. 3 and 5.
FIG. 7 is a pair of views showing conventional rotor pole cores whose radially outer end portions are bent.
FIG. 8 is a view showing another conventional rotor pole core whose radially outer end portions are bent.
FIG. 9 is a view showing still another conventional rotor pole core whose radially outer end portions are bent.

### BEST MODE FOR CARRYING OUT THE INVENTION

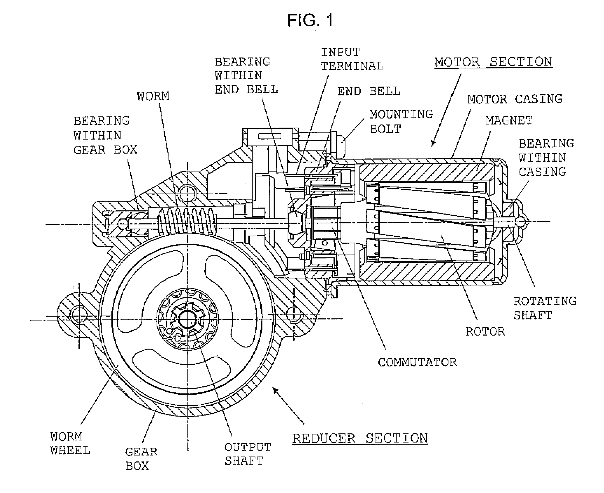

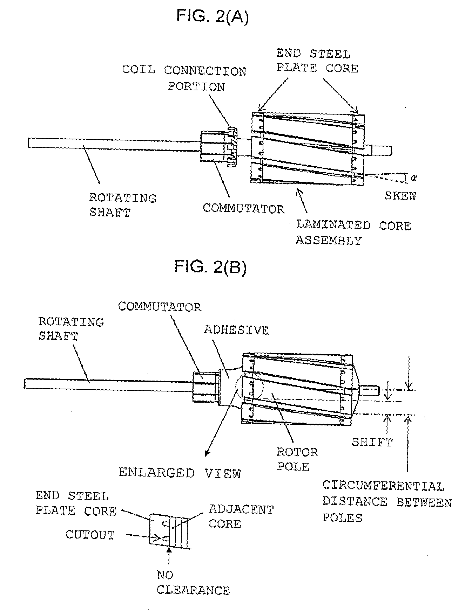

The present invention will next be described with reference to illustrations. FIG. 1 is a longitudinal sectional view of a motor with a speed reducer configured in accordance with the present invention. The motor with a speed reducer is an assembly of a motor section and a reducer section. The motor section is configured such that magnets are attached to the inner circumferential surface of a motor casing, which is formed of a metal material and assumes the form of a closed-bottomed tube. An end bell made of resin is fitted to an opening portion of the motor casing, thereby closing the opening portion. A commutator, and rotor poles composed of a laminated core assembly and coils wound around the laminated core assembly are mounted on a rotating shaft, thereby forming a rotor (see FIG. 2). A pair of input terminals are connected to a pair of brushes in contact with the commutator and project outward through the end bell from the motor section for electrical connection. One end of the rotating shaft is supported by a casing bearing provided at the center of a bottom portion of the closed-bottomed tubular motor casing. The other end of the rotating shaft is supported by an end bell bearing housed in a central portion of the end bell. The rotating shaft extends further outward from the motor section into the reducer section.

The reducer section is attached to the motor section by means of mounting bolts. The reducer section is configured such that a gear box made of resin houses a worm fixed on the rotating shaft, a worm wheel (helical gear) meshed with the worm, and other components. A projecting end of the rotating shaft is supported by a gear box bearing housed in the gear box. When the motor of the motor section is driven, the rotating shaft rotates. The rotation of the rotating shaft rotates the worm wheel via the worm at a reduced speed. The rotation of the worm wheel rotates an output shaft via a buffer member or the like. The rotation of the output shaft can, for example, open and close window glass of an automobile via an unillustrated drive means. The structures of the above-described motor section and reducer section may be the same as the conventional technique, except for the structure of the rotor.

FIG. 2 is a pair of views showing the rotor shown in FIG. 1, wherein section (A) shows the rotor before coils are wound thereon, and section (B) shows the rotor after coils are wound thereon. The rotor is composed of a commutator and rotor poles provided on the rotating shaft. The rotor poles are composed of a laminated core assembly and coils wound around the laminated core assembly. Two end steel plate cores are provided such that one of the end steel plate cores is located at one end of the laminated core assembly and the other end steel plate core is located at the other end of the laminated core assembly. Each end steel plate core has a radially outer end portion bent outward with respect to the shaft axial direction, as will be described in detail later. A predetermined number of cores stacked between the end steel plate cores are ordinary cores formed of stamped steel plates. Further, in the illustrated stacked core assembly, the poles are skewed at a predetermined angle in relation to the shaft axial direction, to thereby reduce cogging. After the commutator and the stacked core assembly are mounted on the rotating shaft as shown in FIG. 2(A), coils are wound around the stacked core assembly, and end portions of the coils are connected to coil connection portions provided at end portions of commutator pieces which constitute the commutator. After that, as shown in FIG. 2(B), the end portions of the coils, including the coil connection terminals, are covered with an adhesive (e.g., epoxy adhesive), whereby the coils can be fixed.

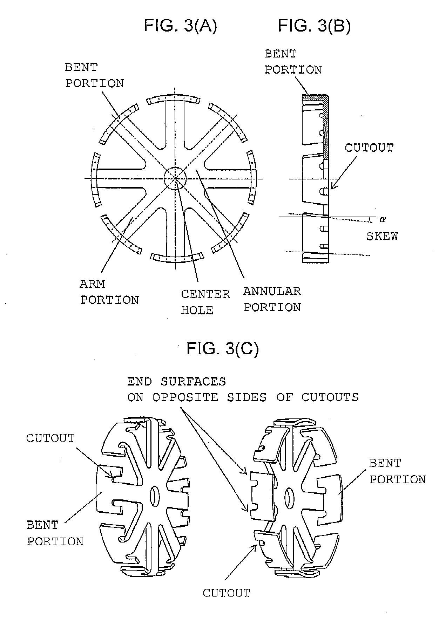

FIG. 3 is a series of views showing, in detail, an end steel plate core having bent portions shown in FIG. 2, wherein section (A) is a side view of the end steel plate core as viewed from the outer side with respect to the shaft axial direction, and section (B) is a view of the end steel plate core as viewed from the right side thereof in section (A), wherein an upper half of the end steel plate core is shown in cross section. Section (C) is a perspective view showing two end steel plate cores which have the same structure and are provided such that one of the end steel plate cores is located at one end of the laminated core assembly and the other end steel plate core is located at the other end of the laminated core assembly. The illustrated end steel plate cores form 8 rotor poles. Each of the end steel plate cores having bent portions includes an annular portion having a center hole for receiving the motor shaft; 8 arm portions which extend radially outward from the annular portion and which are identical in number with the rotor poles; and bent portions extending from radially outer ends of the arm portions approximately perpendicular to the arm portions, and having a L-shaped cross section. The bent portions are wider than the arm portions as measured in the circumferential direction and circumferentially extend toward adjacent poles. As shown in FIG. 3(B), the width of the bent portions as measured in the radial direction is equal to the plate thickness (i.e., small). Therefore, a sufficiently large winding space can be secured.

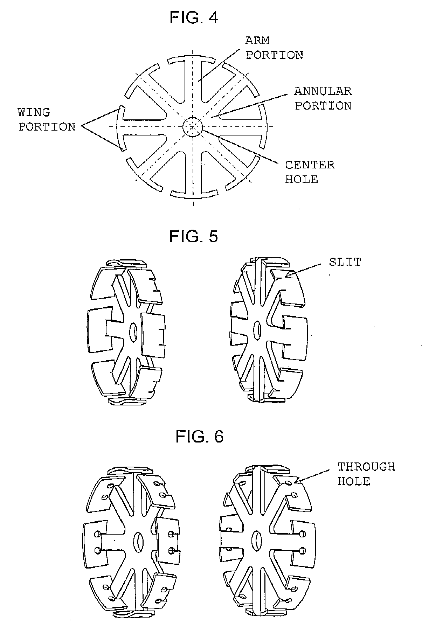

Further, the illustrated core has U-shaped cutouts which are formed in each wide bent portion extending from the corresponding arm portion such that the cutouts are located on opposite sides of the arm portion. Desirably, the width of the U-shaped cutouts is about 0.8 to 1.3 mm in the case where the material thickness T is 0.8 mm). In order to increase the cross sectional area of the magnetic path to a possible extent, as illustrated, each bent portion assumes a rectangular shape as a whole, as viewed in the radial direction. However, as shown in FIG. 3(B), the bent portions are skewed at an angle α in relation to the shaft axial direction; i.e., each of the bent portions assumes the form of a parallelogram. The skew angle is desirably set to the angle α determined such that a positional shift corresponding to a half of the inter-pole circumferential distance is provided between the opposite ends of the laminated core assembly (see FIG. 2). It is empirically known that, when the bent portions are screwed at an angle greater than the angle α, the motor performance lowers. This skew angle α is obtained by converting to an angle the ratio of the shift to the axial length of the entire laminated core assembly. For example, in the case where the number of rotor poles is 8 and the length of the laminated core assembly is 32 mm, the skew angle α is desirably about 8° to 9°. The skewed magnetic poles prevent coils from being caught by the bent portions during winding. However, only the bent portions at one axial end of the laminated core assembly may be skewed. End surfaces of each end steel plate core located on opposite sides of the U-shaped cutouts (see FIG. 3(C) come into contact with corresponding wing portions (see FIG. 4) of a steel plate core adjacent to the end core with respect to the shaft axial direction. A partial enlarged view of FIG. 2(B) shows a state where one end steel plate core is in contact with a core adjacent thereto without any clearance therebetween.

FIG. 4 is a view exemplifying a steel plate core located between the end steel plate cores. A predetermined number of ordinary cores not having bent portions are staked between the end steel plate cores (see FIG. 3) which are located at the opposite ends and have bent portions. Although no bent portions are provided, each of the ordinary cores also includes an annular portion having a center hole for receiving the motor shaft; arm portions which extend radially outward from the annular portion and which are identical in number with the rotor poles; and wing portions extending from radially outer ends of the arm portions toward adjacent poles. In the case of the illustrated 8-pole configuration, desirably, the width of the wing portions as measured in the radial direction is approximately equal to the plate thickness. For example, when the cores shown in FIG. 4 are stacked and the end steel plate cores which are shown in FIG. 3 and have bent portions are stacked thereon in the shaft axial direction, the end surfaces on the opposite sides of the cutouts come into contact with the corresponding wing portions of the cores shown in FIG. 4 without formation of a clearance therebetween.

FIGS. 5 and 6 are pairs of views showing, in detail, pairs of end cores having bent portions different from those shown in FIG. 3. In the core shown in FIG. 5, slits are provided as cutouts, and bent portions are raised. In the core shown in FIG. 6, through holes are provided at the bottoms of slits so as to facilitate the raising of the bent portions.

## Claims

1. A small-sized motor configured such that magnets are attached to an inner circumferential surface of a motor casing, an end bell is fitted into an opening portion of the motor casing, and a commutator and rotor poles formed by a laminated core assembly and coils wound around the laminated core assembly are provided on a rotating shaft to thereby form a rotor, the rotating shaft being supported by a bearing provided at the center of a bottom portion of the motor casing and a bearing provided in a central portion of the end bell, wherein the laminated core assembly is formed by means of stacking a predetermined number of steel plate cores and two end steel plate cores in a shaft axial direction such that one of the end steel plate cores is located at one end of the laminated core assembly and the other end steel plate core is located at the other end of the laminated core assembly, each end steel plate core having a radially outer end portion bent outward with respect to the shaft axial direction, the motor **characterized in that:**
each of the end steel plate cores includes an annular portion having a center hole for receiving the rotating shaft, arm portions which extend radially outward from the annular portion and which are identical in number with the rotor poles, and bent portions extending from radially outer ends of the arm portions;
the bent portions are wider than the arm portions as measured in the circumferential direction and circumferentially extend toward adjacent poles, and each wide bent portion, which extends from the corresponding arm portion, has cutouts located on opposite sides of the arm portion.

2. A small-sized motor according to claim 1, wherein each of the cutouts assumes a U-like shape, the form of a slit, or the form of a slit having a through hole at the bottom of the slit.

3. A small-sized motor according to claim 1, wherein the rotor poles are skewed at a predetermined angle in relation to the shaft axial direction, and the bent portions are screwed, in relation to the shaft axial direction, at an angle equal to the screw angle of the rotor poles.

4. A small-sized motor according to claim 1, wherein each of the steel plate cores located between the end steel plate cores is configured such that each of radially extending arm portions has a wing portion extending from the radially outer end thereof toward adjacent poles; and the laminated core assembly is configured such that end surfaces of each end steel plate core located on opposite sides of the cutouts come into contact with corresponding wing portions of a steel plate core adjacent to the end steel plate core with respect to the shaft axial direction.

5. A small-sized motor according to claim 1, which constitutes a motor with a speed reducer by being integrated with a reducer section configured such that a worm fixed to the rotating shaft and a worm wheel in meshing-engagement with the worm are accommodated in a gear box formed of resin.
